(19) Europäisches Patentamt
European Patent Office
Office européen des brevets

(11) **EP 2 525 157 B1**

(12) **FASCICULE DE BREVET EUROPEEN**

(45) Date de publication et mention
de la délivrance du brevet:
**27.06.2018 Bulletin 2018/26**

(51) Int Cl.:
***F24D 17/00*** *(2006.01)*      ***F24D 17/02*** *(2006.01)*
***F24D 19/10*** *(2006.01)*

(21) Numéro de dépôt: **12165306.7**

(22) Date de dépôt: **24.04.2012**

(54) **Procedé de production d'un débit d'eau chaude et système associé**

Verfahren zur Herstellung eines Heisswasserdurchsatzes, und entsprechendes System

Method for producing a flow of hot water and associated system

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.05.2011 FR 1154316**

(43) Date de publication de la demande:
**21.11.2012 Bulletin 2012/47**

(73) Titulaire: **ARMINES**
**75272 Paris Cedex 06 (FR)**

(72) Inventeurs:
• **Clodic, Denis**
**92120 PALAISEAU (FR)**
• **Nehme, Georges**
**92160 ANTONY (FR)**

(74) Mandataire: **Delumeau, François Guy et al
Cabinet Beau de Loménie
158, rue de l'Université
75340 Paris Cedex 07 (FR)**

(56) Documents cités:
**EP-A1- 1 724 531      WO-A2-2011/045767
FR-A1- 2 935 784**

EP 2 525 157 B1

Printed by Jouve, 75001 PARIS (FR)

**Description**

Arrière plan de l'invention

L'invention porte sur un procédé de production d'un débit d'eau chaude et un système associé. Elle trouve notamment son application dans le domaine du chauffage de l'eau chaude sanitaire domestique mais aussi dans le domaine du chauffage de l'eau chaude utilisée dans les procédés industriels.

On connait des pompes à chaleur utilisant les eaux grises telles que décrit dans les brevets FR2885406 (demande 05 04597), EP 1 724 531, ou CN2779309.

Les eaux grises sont des eaux tièdes de récupération dont la température est dépendante de l'utilisation faite par les usagers (particuliers ou industrie) de l'eau distribuée par le réseau de distribution, ces eaux grises proviennent par exemple des douches, des lavabos, des baignoires, des éviers de lavage, des systèmes de lavage industriels, à l'exclusion des toilettes dont les eaux sont appelées eaux noires.

Les eaux grises sont ainsi des eaux tièdes provenant généralement d'un mélange d'eau chaude stockée et d'eau distribuée et qui devient grise du fait de l'addition de savon, de graisses, de débris alimentaires au cours de l'usage qui en est fait. Elles ont une température supérieure à la température de l'eau de ville distribuée ou de l'eau industrielle distribuée. Elles constituent tout le long de l'année une source de chaleur à température faiblement variable, typiquement autour de 32 °C, à condition d'isoler les tuyauteries et de récupérer ces eaux au plus près de leur source.

Les eaux grises sont donc une source tout à fait adaptée à la production d'eau chaude, cette production pouvant être effectuée à l'aide d'une pompe à chaleur, notamment une pompe utilisant un mélange zéotrope (c'est à dire qui bout à température variable en perdant sa composition initiale) de fluides frigorigènes.

Dans l'habitat résidentiel, dans des sites de production industriels ou dans des cuisines de restauration collective, un réseau spécifique doté d'une isolation thermique, indépendant du réseau de collecte des eaux noires, doit néanmoins être mis en place s'il n'est pas déjà existant pour récupérer les eaux grises en vue d'en extraire les calories.

Ces eaux grises, comme indiqué dans le brevet FR2885406, doivent être filtrées et peuvent être stockées dans un réservoir dédié isolé thermiquement, avant leur passage dans une pompe à chaleur. Après extraction de leur énergie, elles peuvent être l'objet d'utilisations diverses ou être rejetées dans le tout à l'égout.

La température de l'eau de ville distribuée est mesurée pour moduler l'un ou l'autre des débits circulant au condenseur de la pompe à chaleur, c'est-à-dire les débits d'eau froide distribuée et de fluide frigorigène, en vue de fixer des conditions de condensation stable. La température de l'eau de ville distribuée et la température de l'eau grise sont également mesurées pour la mise en marche du système.

Comme l'indiquent diverses publications scientifiques et le brevet CN101504190, il est par ailleurs intéressant sur le plan énergétique d'épuiser la tiédeur des eaux grises, dont le débit n'est pas adapté, dans deux échangeurs successifs. Dans un premier échangeur entre l'eau grise et l'eau de ville, l'eau grise est refroidie et l'eau de ville est réchauffée. Dans un deuxième échangeur constituant l'évaporateur d'une pompe à chaleur, l'eau grise est refroidie encore une fois. L'eau de ville, déjà préchauffée dans l'échangeur amont au condenseur, est chauffée dans le condenseur de la pompe à chaleur jusqu'à sa température d'utilisation ou de stockage.

Néanmoins, on reste dans l'attente de solutions toujours plus efficaces sur le plan énergétique, évitant toute perte. Le problème technique abordé est donc d'améliorer le rendement énergétique d'un tel système de production d'eau chaude utilisant comme source de chaleur les eaux grises.

Objet et résumé de l'invention

L'invention consiste en un procédé de chauffage de l'eau chaude sanitaire par une pompe à chaleur utilisant un stock d'eau grise, conservé dans un réservoir de récupération. Plus précisément l'invention consiste en un procédé de production d'un débit d'eau chaude sanitaire ou industrielle, à une température souhaitée à partir d'eau de ville, par une pompe à chaleur comportant un condenseur apte à réchauffer l'eau de ville par un fluide frigorigène qui s'y condense et un évaporateur dans lequel circule de l'eau grise apte à faire évaporer ledit fluide frigorigène, ladite eau grise étant stockée en amont dudit évaporateur dans un réservoir alimenté par de l'eau tiède utilisée obtenue par mélange de l'eau chaude et de l'eau de ville, le procédé comportant une étape d'obtention d'au moins une température parmi la température de l'eau de ville et la température de l'eau tiède utilisée, et étant caractérisé en ce qu'il comporte de plus une étape de réglage du débit d'eau grise sortant dudit réservoir et entrant dans ledit évaporateur en fonction de la au moins une température précédemment obtenue.

Ce réglage particulier du débit d'eau grise permet d'améliorer le rendement énergétique par rapport aux procédés existants, en tenant compte d'une valeur de température énergétiquement déterminante pour le transfert de chaleur, susceptible de varier et d'avoir un impact sur le transfert de chaleur, défavorable si une telle variation n'est pas prise en compte.

Selon un mode de réalisation préféré, le procédé comprend une étape d'obtention de chacune des températures parmi la température de l'eau de ville et la température de l'eau tiède utilisée. Dans ce cas, l'étape de réglage du débit d'eau grise sortant dudit réservoir et entrant dans ledit évaporateur peut être effectuée en fonction des deux températures. Ainsi, on prend en compte les deux paramètres susceptibles de varier et d'avoir un impact sur le transfert de chaleur.

Selon un mode de réalisation particulier, le procédé comporte de plus une étape de calcul d'un rapport d'amplification de débit égal au rapport de l'écart des températures de l'eau chaude et de l'eau de ville à l'écart entre les températures d'eau tiède utilisée et d'eau de ville, et une étape de réglage du débit d'eau grise sortant dudit réservoir et entrant dans ledit évaporateur pour que le rapport entre ce débit et ledit débit d'eau chaude à produire soit fonction dudit rapport d'amplification de débit.

Avantageusement le rapport du débit d'eau grise par le débit d'eau chaude à produire est choisi égal, à 10 ou 20% près au rapport d'amplification. Un correctif dépendant d'autres paramètres peut également être introduit sans sortir du cadre de l'invention. Le débit d'eau grise est toujours supérieur au débit d'eau de ville à chauffer car le rapport d'amplification de débit est toujours supérieur à 1. L'optimum énergétique est obtenu quand le rapport du débit d'eau grise par le débit d'eau chaude à produire est choisi égal au rapport d'amplification.

Le procédé peut comprendre une détermination préalable du débit d'eau chaude à produire à l'aide d'une méthode d'apprentissage, par exemple par algorithme génétique, utilisant au moins une historique du niveau d'eau mesuré dans ledit réservoir alimenté par de l'eau tiède utilisée, accédant ainsi aux variations répétitives des besoins d'eau chaude au cours des semaines et des saisons. Grâce à cette caractéristique, on prévoit au plus près les besoins en eau chaude et l'installation est la plus économique possible. Ainsi, un régulateur choisit la production d'eau chaude du jour à venir, celle-ci étant préférentiellement la plus faible possible. Cela permet alors de minimiser le temps de fonctionnement de la pompe à chaleur et de minimiser aussi les pertes thermiques du réservoir d'eau chaude qui peut n'être que partiellement rempli.

Eventuellement, le procédé comporte une étape de préchauffage de l'eau de ville par ladite eau grise dans un échangeur par échange direct situé en aval dudit réservoir et en amont dudit condenseur. Comme évoqué en introduction, cette caractéristique est également avantageuse sur le plan énergétique. L'étape de préchauffage peut ainsi être effectuée de manière à amener la température de l'eau de ville à une température inférieure de 2K à ladite température d'eau grise stockée dans ledit réservoir, permettant d'augmenter l'efficacité énergétique du dispositif. Cette optimisation est possible car la variation au cours du temps du rapport d'amplification de débit est inférieure à 8 ou 10 %. De manière générale, la faible variation du rapport de débits d'eau grise et d'eau de ville à chauffer permet de dimensionner également les deux échangeurs de la pompe à chaleur par en fonction des débits et de leur rapport.

Selon une première approche, l'étape d'obtention de la température d'eau tiède utilisée consiste à estimer cette température à partir d'une température d'eau grise stockée dans le réservoir et mesurée par un capteur, ainsi que d'une déperdition théorique entre l'eau tiède telle qu'utilisée et l'eau grise stockée. Alternativement, selon une autre approche, l'étape d'obtention de la température d'eau tiède utilisée comprend une étape de mesure directe de cette température.

Selon une caractéristique de mise en oeuvre au démarrage, le procédé peut comporter une étape consistant à vérifier que la température d'eau tiède utilisée est supérieure à une température seuil avant de stocker cette eau tiède utilisée dans ledit réservoir.

Selon une autre caractéristique possible de mise en oeuvre au démarrage, le procédé comporte une étape préliminaire de remplissage dudit réservoir avec de l'eau à une température cible comprise entre plus et moins 8 K autour de la température attendue pour les eaux grises, déterminée en fonction d'un usage dudit procédé. Cette caractéristique permet de procéder au démarrage du procédé de manière simple. D'autres possibilités de démarrage du système peuvent être envisagées.

L'invention concerne aussi un système de production d'un débit d'eau chaude à une température souhaitée à partir d'eau de ville par une pompe à chaleur dans laquelle circule de l'eau grise, ladite eau grise étant stockée en amont dudit évaporateur dans un réservoir alimenté par de l'eau tiède utilisé obtenue par mélange de l'eau chaude et de l'eau de ville, le système comportant des moyens d'obtention d'au moins une température parmi la température de l'eau de ville et la température de l'eau tiède utilisé et étant caractérisé en ce qu'il comporte également des moyens de réglage du débit d'eau grise sortant dudit réservoir et entrant dans ledit évaporateur en fonction d'au moins une température.

Ce système permet d'améliorer le rendement énergétique, en tenant compte d'une valeur énergétiquement déterminante pour le transfert de chaleur, susceptible de varier et d'avoir un impact sur le transfert de chaleur, impact défavorable si une telle variation n'est pas prise en compte. Selon un mode préféré, le système comporte des moyens d'obtention de chacune des températures parmi la température de l'eau de ville et la température de l'eau tiède utilisé, prenant ainsi en compte les deux paramètres susceptibles de varier.

Selon un mode de réalisation, le système comporte des moyens de calcul d'un rapport d'amplification de débit égal au rapport de l'écart des températures de l'eau chaude et de l'eau de ville et à l'écart des températures de l'eau tiède utilisé et de l'eau de ville et des moyens de réglage du débit d'eau grise sortant dudit réservoir et entrant dans ledit évaporateur pour que le rapport entre ce débit et ledit débit d'eau chaude à produire soit dépendant dudit rapport d'amplification de débit. Le système est alors remarquable en ce que les rapports des débits d'eau de ville au condenseur et d'eau grise à l'évaporateur sont adaptés pour extraire le plus efficacement possible, sur le plan énergétique, la chaleur de l'eau grise pour chauffer l'eau de ville distribuée et en faire de l'eau chaude.

Selon un mode de réalisation préféré, le système comprend un réservoir d'eau chaude après chauffage. Dans ce cas, le réservoir d'eau grise est dimensionné, vis-à-vis du stockage d'eau grise pour maintenir le rapport de débit évoqué. Ainsi, il a préférentiellement un volume essentiellement égal au volume du réservoir d'eau chaude après chauffage multiplié par le rapport d'amplification de débit. Le volume du stock d'eau grise est alors suffisant pour répondre à la plus forte demande envisagée et est qualifié pour cela de « stock tampon ».

La constitution d'un stock tampon en eau grise et non pas en eau chaude est avantageuse, car, de manière générale, la déperdition d'énergie d'un stock au cours du temps est proportionnelle à l'écart des températures du stock et de l'environnement. Il en résulte, à qualité d'isolation égale, que la déperdition d'énergie est bien inférieure pour un stock tampon d'eau grise que pour un stock tampon d'eau chaude.

Alternativement, l'eau chaude après chauffage n'est pas stockée.

Selon un mode de réalisation particulièrement avantageux, le fluide frigorigène est un mélange de fluides frigorigènes dont les changements de phase à la condensation s'effectuent avec un écart de température d'au moins 12K entre le début et la fin de la condensation à pression constante. Cette caractéristique supplémentaire permet d'améliorer le rendement de la pompe à chaleur.

Par ailleurs, le rapport d'amplification de débit entre les débits d'eau chaude et d'eau grise peut être contrôlé avec un double système de stockage d'eau chaude et d'eau grise, ou la combinaison d'un système de stockage d'eau chaude et d'un système circulant d'eau grise, ou la combinaison d'un système de stockage d'eau grise et d'un système circulant d'eau chaude.

Avantageusement, on utilise de plus l'électricité de nuit, dont le tarif est inférieur au tarif de jour, pour constituer le stock d'eau chaude.

Brève description des figures

D'autres caractéristiques et avantages de l'invention ressortiront de la description faite ci-dessous en référence aux dessins annexés qui en illustrent deux exemples de réalisation dépourvus de caractère limitatif.

La figure 1 représente un mode de réalisation d'un système selon l'invention, dans une configuration.
La figure 2 représente une deuxième configuration du même mode de réalisation d'un système selon l'invention.
La figure 3 présente un diagramme température - entropie massique d'un mélange de fluides frigorigènes utilisé dans un mode de réalisation de l'invention.
La figure 4 présente un deuxième mode de réalisation de l'invention.
Les figures 5 à 7 présentent des modes de réalisation d'un procédé selon l'invention.

Description détaillée de plusieurs modes de réalisation

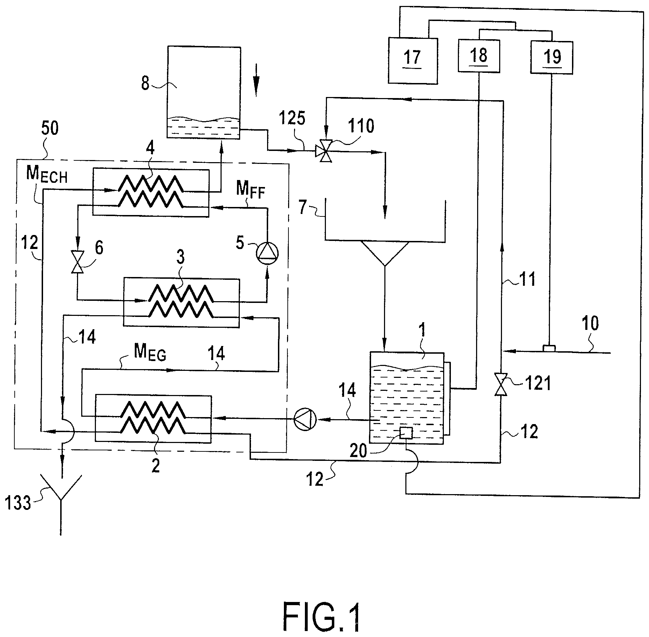

La **figure 1** représente un système de chauffage d'eau sanitaire conforme à un mode particulier de réalisation de l'invention.

Dans le mode de réalisation décrit ici, ce système comporte un réservoir 8 pour stocker l'eau chaude produite par le système, aussi qualifiée d'eau chaude sanitaire.

Nous supposerons dans cet exemple que l'eau chaude sanitaire est stockée dans le réservoir 8 à une température $T_{ECH}$ supérieure à 55°C.

L'utilisation de l'eau chaude sanitaire par les utilisateurs domestiques varie d'une température de l'ordre de 38 °C pour les douches à une température de l'ordre de 45 °C pour la vaisselle. Cependant, pour des raisons de sécurité sanitaire, notamment pour limiter la prolifération de la légionnelle, le stockage de l'eau chaude se fait couramment à une température d'au moins 55 °C. Il faut donc effectuer un mélange entre l'eau chaude puisée dans le réservoir 8 à au moins 55 °C et de l'eau de ville distribuée à température variable.

Conformément à l'invention, et d'une façon générale, l'eau chaude sanitaire est obtenue par chauffage d'eau de ville distribuée, la température $T_{EV}$ de l'eau de ville distribuée étant variable et en tout état de cause non maîtrisée. Elle est produite par une pompe à chaleur 50, à l'aide de l'énergie d'un stock d'eau grise conservé dans un réservoir 1.

La pompe à chaleur 50 utilise un mélange zéotrope de fluides frigorigènes. Elle comporte principalement un évaporateur 3, un compresseur 5 agissant sur le fluide frigorigène, un condenseur 4, une vanne de détente 6 pour le fluide frigorigène, un circuit de réchauffement d'eau de ville 12 et un circuit d'eau grise 14. L'eau grise, après avoir transféré sa chaleur, est rejetée dans un tout à l'égout 133.

Les débits dans le condenseur 4, où circulent l'eau de ville à chauffer (débit $M_{ECH}$) et le mélange de fluides frigorigènes (débit $M_{FF}$), sont à contre-courant. De même à l'évaporateur 3, l'eau grise (débit $M_{EG}$) circule à contre-courant du fluide frigorigène (débit $M_{FF}$).

L'eau grise utilisée par la pompe à chaleur 50 provient de l'eau tiède utilisée par les usagers, résidents ou industriels. A titre d'exemple, on a représenté, sur la figure 1, un évier 7 dont on récupère l'eau grise dans un réservoir 1.

L'eau tiède a été initialement obtenue, grâce à un mélangeur 110, par mélange d'eau chaude sanitaire à température $T_{ECH}$, provenant, via une canalisation 125, du réservoir d'eau chaude 8, et d'eau de ville distribuée (froide), à température $T_{EV}$, amenée par une canalisation 11. Nous supposerons dans cet exemple que la température $T_{EV}$ de l'eau de ville distribuée amenée par la canalisation 11 est susceptible de varier entre 5°C et 20°C.

La masse $M_{UTIL}$ d'eau tiède utilisée, ici dans l'évier 7, est égale à la somme réalisée au mélangeur 110 des masses $M_{ECH}$ d'eau chaude déstockée du réservoir 8 et $M_{EV}$ d'eau de ville distribuée utilisées.

$$M_{UTIL} = M_{ECH} + M_{EV} \qquad (1)$$

En fonction de l'usage, la température $T_{UTIL}$ de l'eau tiède utilisée est typiquement comprise entre 38°C (température d'usage pour une douche) et 45°C (température d'usage pour un lave-vaisselle). La température $T_{EG}$ de l'eau grise stockée dans le réservoir 1 est sensiblement inférieure à la température de l'eau tiède utilisée $T_{UTIL}$ en raison des déperditions au niveau de l'évier, de la douche ou du lave-vaisselle, qui sont typiquement de l'ordre de 5°C. La température $T_{EG}$ de l'eau grise dans le réservoir 1 est donc généralement comprise entre 33°C et 40°C.

Du point de vue énergétique, l'énergie $E_{UTIL}$ de la masse d'eau tiède obtenue au mélangeur 110, exprimée en kilojoules, est la somme des énergies $E_{ECH}$ et $E_{EV}$ de la masse d'eau chaude et de la masse d'eau de ville.

$$E_{UTIL} = E_{ECH} + E_{EV} \qquad (2)$$

soit, en introduisant la capacité calorifique massique cp (exprimées en kJ /kg.K) de l'eau :

$$M_{UTIL}.cp.T_{UTIL} = M_{ECH}.cp.T_{ECH} + M_{EV}.cp.T_{EV} \quad (2')$$

En considérant la capacité calorifique de l'eau constante dans la gamme de température considérée, l'équation (2') se simplifie en :

$$M_{UTIL}.T_{UTIL} = M_{ECH}.T_{ECH} + M_{EV}.T_{EV} \qquad (3)$$

En introduisant le rapport de masse $X_m = M_{UTIL}/M_{ECH}$, (rapport de la masse d'eau tiède utilisée sur la masse d'eau chaude déstockée du réservoir 8, appelé rapport d'amplification de débit) on obtient, en combinant avec (1):

$$X_m = (T_{ECH} - T_{EV}) / (T_{UTIL} - T_{EV}) \qquad (4)$$

En considérant la masse volumique de l'eau comme constante pour des températures comprises entre 30°C et 55°C, le rapport d'amplification de débit $X_v$ des volumes d'eau tiède utilisée et d'eau chaude déstockée du réservoir 8, exprimé en m³/m³, est identique au rapport des masses $X_m$ exprimé en kg/kg. Par conséquent :

$$X_v = (T_{ECH} - T_{EV}) / (T_{UTIL} - T_{EV}) \qquad (5)$$

Cette équation (5) est remarquable en ce qu'elle permet de dimensionner le volume du réservoir 1 d'eau grise en fonction du volume du réservoir 8 d'eau chaude sanitaire.

Plus précisément, dans l'exemple décrit ici, en considérant que la température de l'eau chaude sanitaire $T_{ECH}$ est égale à 55°C, que la température $T_{EV}$ de l'eau de ville distribuée varie entre 5°C et 20°C et que la température $T_{UTIL}$ de l'eau tiède utilisée varie entre 38°C et 45°C, on obtient :

$$(55 - 20) / (45 - 20) < X_v < (55 - 5) / (38-5)$$

$$1.4 < X_v < 1.51$$

On précise que le rapport des masses est définit au point de mélange. La perte thermique (différence entre $T_{UTIL}$ et $T_{ECH}$) ne change pas la relation, mais requiert une puissance supplémentaire.

Par conséquent, dans l'exemple de réalisation décrit ici, le rapport du volume d'eau grise à stocker au volume d'eau chaude à stocker varie entre 1,4 et 1,51, ce qui a pour conséquence que, sur le plan de la construction, il est avantageux de construire le réservoir 1 d'eau grise de manière à ce que son volume soit environ 1,6 fois plus grand que le volume du réservoir 8 d'eau chaude.

Il est de plus remarquable que la variation maximale du rapport entre les volumes d'eau tiède utilisée et d'eau chaude en fonction des variations des températures de l'eau de ville et de l'eau grise n'est que de 1,51 / 1,4 = 1,08 c'est-à-dire moins de 8 %. Il peut donc être considéré comme constant, et sur cette base, le concepteur de pompe à chaleur peut dimensionner les échangeurs 2, 3 et 4.

Comme mentionné précédemment, il est intéressant d'un point de vue énergétique de stocker l'eau grise plutôt que l'eau chaude, la déperdition de chaleur proportionnelle à l'écart de températures, à qualité d'isolation égale, étant bien inférieure pour l'eau grise, de température moyenne 32 °C, que pour l'eau chaude de température 55 °C.

Dans le mode de réalisation décrit ici, la masse d'eau grise stockée dans le réservoir 1 est déstockée pendant les heures où le tarif électrique est le plus bas, généralement la nuit, typiquement de 23 h à 5 h du matin.

Dans l'exemple de réalisation, on utilise de plus le fait que l'utilisation d'eau chaude sanitaire est prévisible aux différents jours et heures de la semaine, de sorte que le débit $M_{ECH}$ d'eau chaude sanitaire à produire est obtenu par apprentissage.

Plus précisément, cette évaluation de débit est réalisée par un régulateur 17 apte à effectuer un apprentissage, par exemple par algorithme génétique, sur la base de l'historique des consommations d'eau chaude sanitaire aux différents jours et heures des semaines passées.

Le régulateur se base sur le niveau et la température $T_{EG}$ de l'eau grise dans le réservoir 1 qui sont mesurés par des capteurs 18 et 20. Il utilise également la température $T_{EV}$ de l'eau de ville distribuée à l'arrivée de l'eau de ville 10, mesurée par un capteur 19.

Le régulateur 17 définit le temps de marche du compresseur 5 de la pompe à chaleur 50, et d'une pompe d'eau grise 141 commandant l'entrée de l'eau de ville distribuée dans la pompe à chaleur 50. Il définit aussi le débit d'eau de ville traitée par la pompe à chaleur par le temps d'ouverture d'une vanne régulante 121 qui commande l'entrée de l'eau de ville distribuée dans la pompe à chaleur.

Le dimensionnement du réservoir d'eau grise 1 est établi en prenant en compte la demande maximale envisagée. La charge initiale d'eau grise, constituant un stock tampon, n'est vidée que pour cette demande maximale, tous les besoins journaliers étant inférieurs.

Pour produire l'eau chaude sanitaire à stocker dans le réservoir 8, le régulateur 17 ouvre la vanne régulante 121 d'arrivée d'eau de ville distribuée avec un débit $M_{ECH}$ et met en marche la pompe d'eau grise 141 pour extraire de l'eau grise du réservoir 1, avec un débit d'eau grise $M_{EG}$.

Par construction du système, le volume d'eau grise à utiliser doit être égal au volume d'eau tiède utilisée ($M_{EG}$ = $M_{UTIL}$). Le rapport de débits $M_{EG}/M_{ECH}$ est donc fixé égal au rapport $X_m$ déterminé précédemment, en assimilant de plus $T_{EG}$ et $T_{UTIL}$.

Par exemple, lorsque la température $T_{EV}$ de l'eau de ville distribuée et $T_{UTIL}$ de l'eau tiède utilisée sont respectivement égales à 5°C et 38°C, le régulateur 17 fixe le rapport de débit $M_{EG}/M_{ECH}$ tel que :

$$M_{EG}/M_{ECH} = Xm = (T_{ECH} - T_{EV}) / (T_{UTIL} - T_{EV}) = (55 - 5) / (38 - 5)$$

$$M_{EG}/M_{ECH} = 1,51.$$

Dans cet exemple, le débit $M_{EG}$ d'eau grise est fixé à une valeur supérieure de 51 % au débit $M_{ECH}$ d'eau chaude.

En résumé, dans le mode de réalisation décrit ici, le système de chauffage selon l'invention comporte un régulateur 17 apte à :

- obtenir la température $T_{EV}$ de l'arrivée d'eau de ville 10 et la température $T_{EG}$ dans le réservoir d'eau grise 1, par l'utilisation de deux capteurs de température 19 et 20 ;
- déterminer le débit $M_{ECH}$ d'eau chaude à produire par apprentissage ;
- calculer le rapport $X_m$, et en déduire le débit d'eau grise $M_{EG}$; et
- contrôler la vanne régulante 121 et la pompe d'eau grise 141 en conséquence.

Dans le mode de réalisation décrit ici, la pompe à chaleur 50 comporte de plus un premier échangeur 2 de préchauffage de l'eau de ville, configuré pour permettre un premier échange thermique entre l'eau grise introduite par la pompe 141 et l'eau de ville distribuée, amenée par la vanne régulante 121.

L'évaporateur 3 et le condenseur 4 de la pompe à chaleur 50 sont dimensionnés à la conception en fonction du rapport des débits $M_{ECH}$ et $M_{EG}$ d'eau chaude sanitaire et d'eau grise, considéré comme constant (car variant de manière inférieure à 8% ou 10% dans cet exemple comme expliqué précédemment).

Dans l'exemple de réalisation décrit ici, les débits sont finalement choisis constants, constituant ainsi un point de fonctionnement systématique de la pompe à chaleur 50.

Le temps de fonctionnement de la pompe à chaleur 50 est contrôlé par le régulateur 17, en fonction de la quantité $M_{ECH}$ d'eau chaude à produire.

En pratique, la pompe à chaleur fonctionne lorsque les vannes 121 et 141 sont ouvertes.

Le mélange de fluides frigorigènes qui s'évapore dans l'évaporateur 3 et se condense dans le condenseur 4 est choisi pour minimiser les pertes exergétiques par minimisation des écarts de températures entre le mélange de fluides frigorigènes et l'eau grise à refroidir d'une part, et l'eau de ville à réchauffer d'autre part.

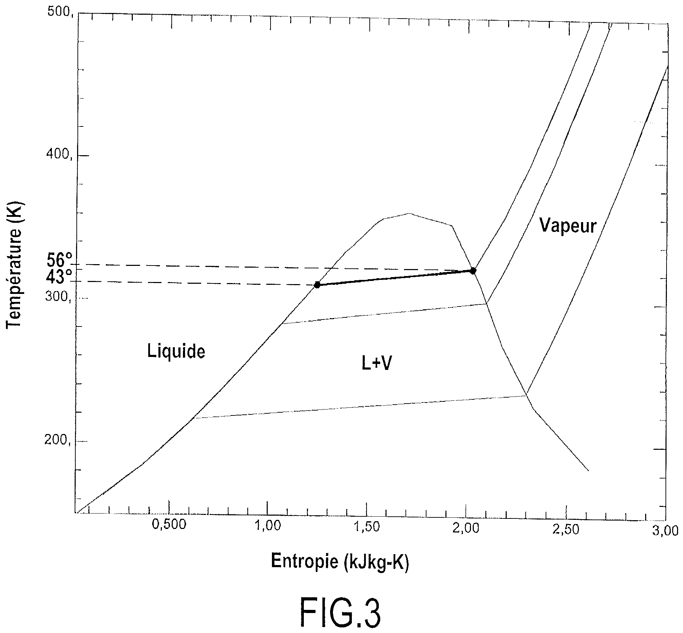

A titre d'exemple, la **figure 3** est un diagramme température - entropie massique d'un mélange de fluides frigorigènes comprenant les trois fluides $CO_2$/R-32/R-152a dans les compositions massiques respectives de 0,08/0,44/0,48, qui, sous une pression de 2,4 MPa, présente un début de condensation à 56,6 °C et une fin de condensation à 43 °C. Ces caractéristiques minimisent les irréversibilités pour une eau qui se réchauffe d'environ 30 à 55 °C.

D'autres mélanges peuvent être conçus qui offrent des glissements de température entre 15 et 25 K. Ces glissements de température peuvent être ajustés en choisissant des fluides frigorigènes qui ont des températures normales d'ébullition étagées. La température normale d'ébullition $T_{nb}$ est la température d'ébullition à pression atmosphérique. Pour obtenir un glissement de l'ordre de 12 à 25 K, il faut choisir des fluides dont les températures normales d'ébullition sont distantes les unes des auters du même ordre de grandeur.

Par exemple, des proportions variables de R-152a, de R-32 et de $CO_2$, de températures normales d'ébullition $T_{nb}$ respectives -26 °C, -47 °C et -78 °C permettent de créer des mélanges dont les glissements de température à la condensation varient de 12 à 25 K.

Le mélange de $CO_2$/R-32/R-152a de compositions respectives 0,08/0,44/0,48 présente par exemple un glissement de 13,6 K pour une pression de condensation de 2,4 MPa. L'utilisation d'un tel mélange zéotrope de fluides frigorigènes dans une pompe à chaleur améliore significativement le coefficient de performance (rapport de la chaleur utile à la puissance électrique dépensée au compresseur).

Les besoins quantitatifs d'eau chaude étant variables selon le jour de la semaine et selon la saison, la température de l'eau de ville variant selon la saison et la région, le stockage d'eau chaude dans le réservoir 8 permet de limiter la taille de la pompe à chaleur 50 et d'utiliser de l'électricité durant la nuit.

La température de l'eau de ville distribuée varie typiquement de +5 °C à +20 °C dans un pays comme la France entre l'été et l'hiver et suivant les régions. Les débits mesurés sur des bâtiments indiquent des variations de débits d'eau chaude d'un facteur 2 entre les différents jours de la semaine. Ces deux types d'écarts sont répétitifs et non pas aléatoires.

Sur cette base, il est possible de mettre en oeuvre des apprentissages automatisés. Il en résulte que pour des systèmes de production qui sont munis d'un stockage d'eau chaude sanitaire à volume variable comme dans le brevet FR2942299, il est possible d'adapter le volume d'eau chaude au plus proche des besoins prévisibles.

On rappelle que si la production d'eau chaude est excédentaire, il en résulte une baisse significative de la performance énergétique car les déperditions du réservoir d'eau chaude vers l'environnement peuvent représenter entre 10 et 20 % de la consommation d'énergie totale. Ces déperditions sont proportionnelles à la surface d'échange chauffée par le stock d'eau chaude que constitue la paroi ou la portion de paroi du ballon de stockage en contact direct avec l'eau chaude stockée.

Par ailleurs, le temps de marche de la pompe à chaleur 50 est directement proportionnel à la masse d'eau chaude produite. Une prévision au plus proche des besoins permet donc de minimiser la consommation énergétique de la pompe à chaleur 50.

Les variations de la demande d'eau chaude sanitaire selon les jours de la semaine sont en partie prévisibles. Leur prévision permet d'extraire juste la quantité d'eau grise du réservoir 1 nécessaire pour satisfaire la demande attendue.

Selon un apprentissage par algorithme génétique utilisant les données du capteur de niveau d'eau grise 18 dans le réservoir 1 de récupération de ces eaux grises et en utilisant les capteurs de température 19 et 20 respectivement pour la température d'eau de ville à l'arrivée de l'eau de ville 10 et la température d'eau grise dans le réservoir 1, le régulateur 17 définit le temps de marche du compresseur 5 de la pompe à chaleur 50, le même temps de marche pour la pompe d'eau grise 141 et le débit d'eau de ville par le même temps d'ouverture de la vanne régulante 121.

Le dimensionnement initial du réservoir d'eau grise 1 prend en compte la demande maximale. Le stock tampon d'eau grise n'est vidé que pour cette demande maximale, tous les autres besoins journaliers étant inférieurs.

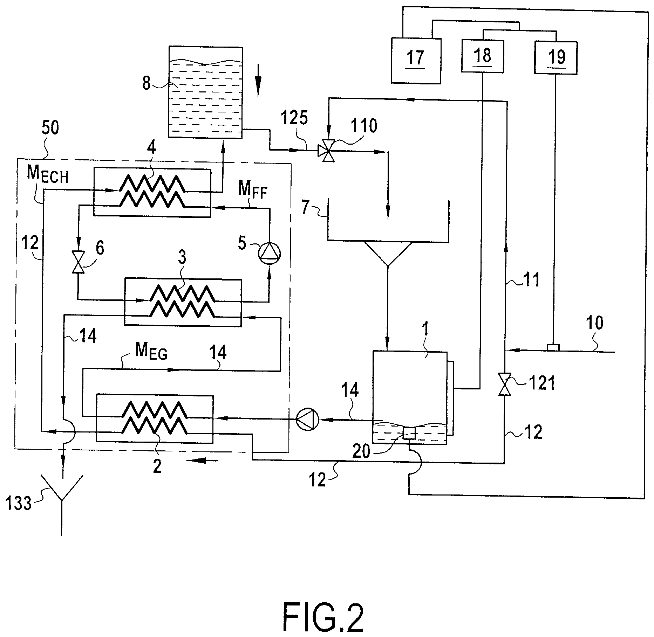

En **figure 2**, on a représenté le système dans une configuration où la pompe à chaleur 50 a fonctionné de manière à constituer un stock tampon important dans le réservoir d'eau chaude 8, en prévision d'une utilisation importante à court terme.

A partir de cette configuration, il est nécessaire de reconstituer un stock d'eau grise dans le réservoir 1. Le procédé peut inclure une étape préalable consistant à vérifier que la température d'eau tiède utilisée $T_{UTIL}$ est supérieure à une température seuil avant de stocker cette eau tiède utilisée dans le réservoir 1.

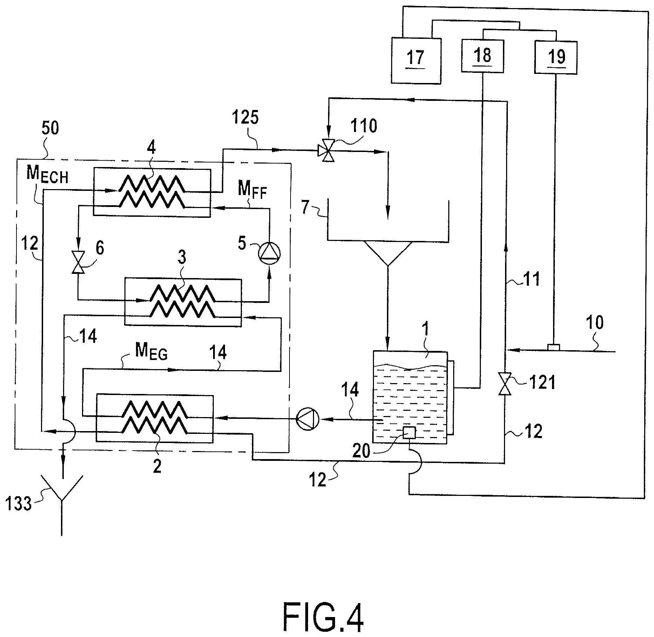

En **figure** 4, on a représenté un deuxième mode de réalisation de l'invention, similaire au précédent, mais pour lequel aucun stock tampon d'eau chaude sanitaire n'est constitué, la sortie de la pompe à chaleur 50 étant connectée directement au mélangeur 110. Il n'y a donc pas de réservoir d'eau chaude tel que le réservoir 8 des figures 1 et 2. La pompe à chaleur 50 est dimensionnée de manière à fournir un débit d'eau chaude plus important que dans le mode de réalisation précédent.

Le débit d'eau chaude $M_{ECH}$ est mesuré en continu par un débitmètre ou une mesure d'ouverture de robinet. Les mesures des températures d'eau de ville et d'eau grise sont effectuées comme dans le précèdent mode de réalisation. Le débit d'eau grise $M_{EG}$ est fixé de manière à ce qu'il soit égal au débit d'eau chaude $M_{EG}$ multiplié par le rapport d'amplification de débit $X_m$.

Dans une variante, applicable aux modes de réalisation des figures 1 et 2 et également au mode de réalisation de la figure 4, l'évaluation de la température d'eau tiède utilisé $T_{UTIL}$ se fait par une mesure de cette température $T_{UTIL}$, par exemple par un capteur au plus près de la sortie de l'évier 7, et dont on moyenne la mesure sur une période de plusieurs heures.

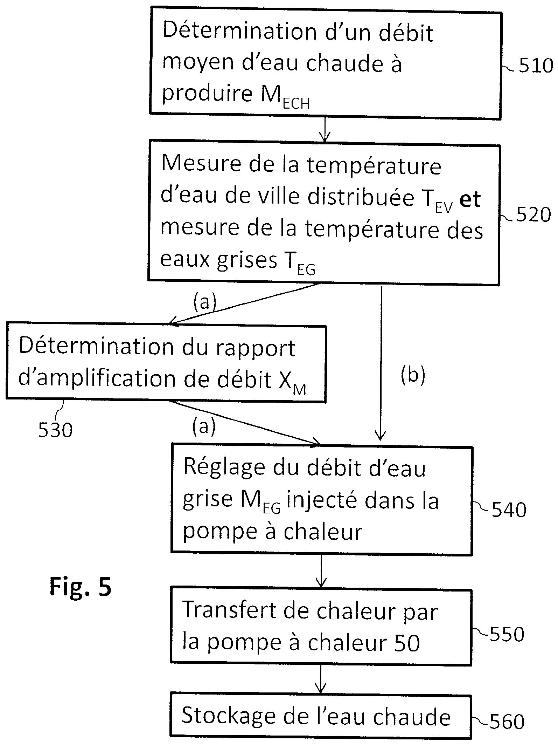

En **figure 5**, on a représenté le déroulement d'un procédé selon l'invention.

Au cours d'une étape 510, on détermine un débit d'eau chaude à produire. Il s'agit dans ce scénario d'un débit moyen à produire de manière constante pendant une période, par exemple pendant la nuit.

Au cours d'une étape 520, on mesure la température $T_{EV}$ de l'eau de ville distribuée par le capteur 19, et la température $T_{EG}$ des eaux grises du réservoir 1, par le capteur 20.

Selon une première variante, repérée par les flèches (a), le régulateur 17 calcule le rapport d'amplification de débit $X_M$, au cours d'une étape 530. Cette étape est effectuée sur la base de la considération préalable que la valeur moyenne de la température $T_{UTIL}$ de l'eau tiède utilisée au mélangeur 110 est égale à la température de l'eau grise stockée majorée d'une valeur de déperdition, par exemple 5 K.

Au cours d'une étape 540, le régulateur 17 fixe le débit d'eau grise injecté dans la pompe à chaleur 50.

Alternativement, sans effectuer formellement l'étape 530, le régulateur 17 peut fixer directement le débit d'eau grise en fonction de la température d'eau de ville distribuée $T_{EV}$ et la température de l'eau grise $T_{EG}$. Cette variante est repérée par la flèche (b). Même si le rapport d'amplification n'est pas formellement calculé au cours d'une étape spécifique, le débit d'eau grise $M_{EG}$ est ajusté en fonction des températures $T_{EV}$ et $T_{EG}$ pour que les débits $M_{EG}$ et $M_{ECH}$ soient dans un rapport égal, dans les faits, au rapport d'amplification de débit $X_M$.

Enfin, au cours d'une étape 550, l'eau chaude produite par la pompe à chaleur 50 est stockée dans le réservoir 1.

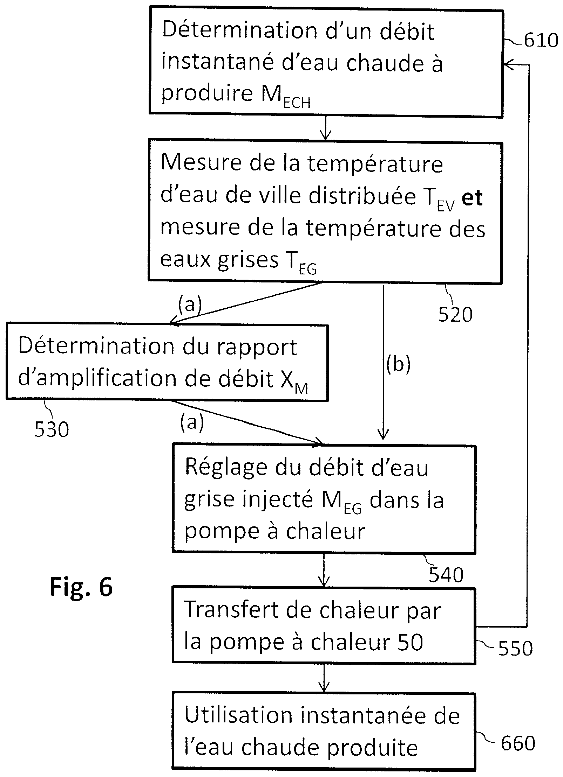

En **figure 6,** on a représenté le déroulement d'une variante du procédé selon l'invention, basée sur l'installation de la figure 4.

Les étapes sont identiques à celles du procédé de la figure 5, à l'exception des étapes 510 et 550, remplacées par des étapes 610 et 650.

L'étape 610 consiste à déterminer un débit instantané d'eau chaude à produire, par exemple en mesurant une ouverture de robinet susceptible de varier avec le temps, car dépendant de l'utilisation faite par l'utilisateur.

L'étape 650 consiste quant à elle à utiliser directement l'eau chaude produite par la pompe à chaleur 50 au cours de l'étape 540, sans stockage. Parallèlement à l'étape 650, une nouvelle valeur de débit instantané est calculée dans une nouvelle étape 610.

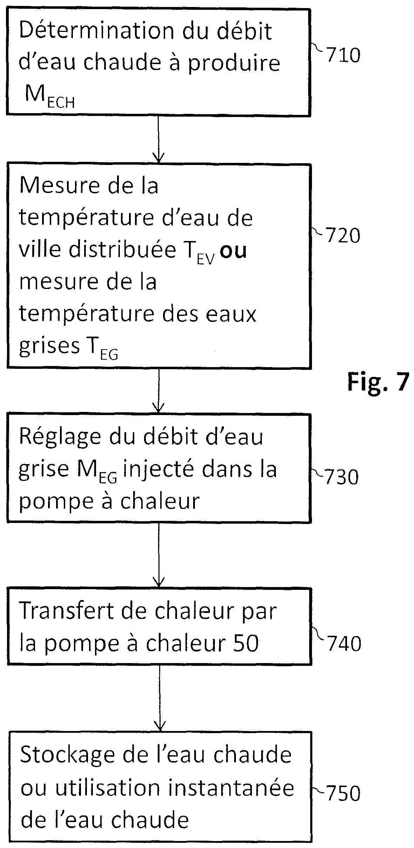

En **figure 7,** on a représenté une variante de l'invention pouvant s'appliquer à l'un ou l'autre des deux procédés présentés précédemment aux figures 5 et 6.

Au cours d'une étape 710, on détermine un débit d'eau chaude à produire, qui peut être un débit instantané ou moyen.

Au cours d'une étape 720, on mesure la température de l'eau de ville distribuée ou la température des eaux grises stockées dans le réservoir 1. Sur cette base, on effectue, au cours d'une étape 730, un réglage du débit d'eau grise injecté dans la pompe à chaleur. Enfin, au cours d'une étape 740, la pompe à chaleur chauffe l'eau de ville à l'aide de l'énergie extraite de l'eau grise et au cours d'une étape 750 on stocke l'eau chaude ainsi produite dans le réservoir 8, ou alternativement, on l'utilise directement au mélangeur 110.

L'invention n'est pas limitée aux modes de réalisation décrits et s'étend aux alternatives envisageables par l'homme du métier dans le cadre de la portée des revendications pour la production d'eau chaude domestique ou industrielle.

## Revendications

1. Procédé de production d'un débit ($M_{ECH}$) d'eau chaude à une température souhaitée ($T_{ECH}$) à partir d'eau de ville (10), par une pompe à chaleur (50) comportant un condenseur (4) apte à réchauffer l'eau de ville par un fluide frigorigène qui s'y condense et un évaporateur (3) dans lequel circule de l'eau grise apte à faire évaporer ledit fluide frigorigène, ladite eau grise étant stockée en amont dudit évaporateur (3) dans un réservoir (1) alimenté par de l'eau tiède utilisée obtenue par mélange (110) de l'eau chaude et de l'eau de ville (10), le procédé comportant une étape d'obtention (520 ; 720) d'au moins une température parmi la température ($T_{EV}$) de l'eau de ville et la température de l'eau tiède utilisée ($T_{UTIL}$), **caractérisé en ce qu'**il comporte de plus une étape de réglage (540 ; 730) du débit d'eau grise ($M_{EG}$) sortant dudit réservoir (1) et entrant dans ledit évaporateur (3) en fonction de la au moins une température ($T_{EV}$, $T_{UTIL}$).

2. Procédé de production d'un débit ($M_{ECH}$) d'eau chaude selon la revendication 1, comportant une étape d'obtention (520) de la température ($T_{EV}$) de l'eau de ville et de la température de l'eau tiède utilisée ($T_{UTIL}$).

3. Procédé de production d'un débit ($M_{ECH}$) d'eau chaude selon la revendication 2,

   - comportant de plus une étape de calcul (530) d'un rapport d'amplification de débit ($X_m$) égal au rapport de l'écart des températures de l'eau chaude ($T_{ECH}$) et de l'eau de ville ($T_{EV}$) à l'écart entre les températures d'eau tiède utilisée ($T_{UTIL}$) et d'eau de ville ($T_{EV}$),
   - et au cours duquel ladite étape de réglage (540) du débit d'eau grise ($M_{EG}$) sortant dudit réservoir (1) et entrant dans ledit évaporateur (3) est telle que le rapport entre ce débit ($M_{EG}$) et ledit débit d'eau chaude à produire ($M_{ECH}$) est fonction dudit rapport d'amplification de débit ($X_m$).

4. Procédé de production d'un débit ($M_{ECH}$) d'eau chaude selon la revendication 3, **caractérisé en ce que** ladite étape de réglage (540) du débit d'eau grise ($M_{EG}$) sortant dudit réservoir (1) et entrant dans ledit évaporateur (3) est telle que le rapport entre ce débit ($M_{EG}$) et ledit débit d'eau chaude à produire ($M_{ECH}$) est égal audit rapport d'amplification de débit ($X_m$).

5. Procédé de production d'un débit ($M_{ECH}$) d'eau chaude selon l'une des revendications 1 à 4, **caractérisé en ce qu'**il comprend une détermination préalable (510) du débit ($M_{ECH}$) d'eau chaude à produire à l'aide d'une méthode d'apprentissage, par exemple par algorithme génétique, utilisant au moins une historique du niveau d'eau mesuré (18) dans ledit réservoir (1) alimenté par de l'eau tiède utilisée.

6. Procédé de production d'un débit ($M_{ECH}$) d'eau chaude selon l'une des revendications 1 à 5, **caractérisé en ce qu'**il comporte une étape de préchauffage de l'eau de ville par ladite eau grise dans un échangeur (2) situé en aval dudit réservoir (1) et en amont dudit condenseur (3).

7. Procédé selon l'une quelconque des revendications 1 à 6, **caractérisé en ce que** ladite étape d'obtention de la température d'eau tiède utilisé ($T_{UTIL}$) consiste à estimer cette température ($T_{UTIL}$) à partir d'une température d'eau grise ($T_{EG}$) mesurée par un capteur (20) et d'une déperdition théorique.

8. Procédé de production d'un débit ($M_{ECH}$) d'eau chaude selon l'une des revendications 1 à 7, **caractérisé en ce qu'**il comporte une étape consistant à vérifier que la température d'eau tiède utilisée ($T_{UTIL}$) est supérieure à une température seuil avant de stocker cette eau tiède utilisée ($T_{UTIL}$) dans ledit réservoir (1).

9. Procédé de production d'un débit ($M_{ECH}$) d'eau chaude selon l'une quelconque des revendications 1 à 8, comportant une étape préliminaire de remplissage dudit réservoir (1) avec de l'eau à une température cible comprise entre plus et moins 8 K autour de la température attendue pour les eaux grises, déterminée en fonction d'un usage dudit procédé.

10. Système de production d'un débit ($M_{ECH}$) d'eau chaude à une température souhaitée ($T_{ECH}$) à partir d'eau de ville (10), par une pompe à chaleur (50) comportant un condenseur (4) apte à réchauffer l'eau de ville par un fluide frigorigène qui s'y condense et un évaporateur (3) dans lequel circule de l'eau grise apte à faire évaporer ledit fluide frigorigène, ladite eau grise étant stockée en amont dudit évaporateur (3) dans un réservoir (1) alimenté par de l'eau tiède utilisée obtenue par mélange (110) de l'eau chaude et de l'eau de ville (10), le système comportant des moyens d'obtention (17, 19, 20) d'au moins une température parmi la température ($T_{EV}$) de l'eau de ville et la température de l'eau tiède utilisé ($T_{UTIL}$) et étant **caractérisé en ce qu'**il comporte de plus des moyens de réglage du débit d'eau grise ($M_{EG}$) sortant dudit réservoir (1) et entrant dans ledit évaporateur (3) en fonction de la au moins une température ($T_{EV}$, $T_{UTIL}$).

11. Système de production d'un débit ($M_{ECH}$) d'eau chaude selon la revendication 10 comportant des moyens d'obtention (17, 19, 20) de la température ($T_{EV}$) de l'eau de ville et de la température de l'eau tiède utilisée ($T_{UTIL}$).

**12.** Système de production d'un débit ($M_{ECH}$) d'eau chaude selon la revendication 11,

- comportant de plus des moyens de calcul (17) d'un rapport d'amplification de débit ($X_M$) égal au rapport de l'écart des températures de l'eau chaude ($T_{ECH}$) et de l'eau de ville ($T_{EV}$) et à l'écart des températures de l'eau tiède utilisée ($T_{UTIL}$) et de l'eau de ville ($T_{EV}$);
- les moyens de réglage (17) du débit d'eau grise ($M_{EG}$) sortant dudit réservoir (1) et entrant dans ledit évaporateur (3) étant de plus aptes à établir que le rapport entre ce débit ($M_{EG}$) et ledit débit d'eau chaude à produire ($M_{ECH}$) soit fonction dudit rapport d'amplification de débit ($X_m$).

**13.** Système de production d'un débit ($M_{ECH}$) d'eau chaude selon l'une des revendications 10 à 12, comprenant un réservoir (8) pour ladite eau chaude produite par ledit système.

**14.** Système de production d'un débit ($M_{ECH}$) d'eau chaude selon la revendication 13, dans lequel le réservoir d'eau grise (1) a un volume essentiellement égal au volume du réservoir d'eau chaude après chauffage (8) divisé par le rapport d'amplification de débit ($X_m$).

**15.** Système de production d'un débit ($M_{ECH}$) d'eau chaude selon l'une quelconque des revendications 10 à 14, dans lequel ledit fluide frigorigène est un mélange de fluides frigorigènes dont les changements de phase à la condensation s'effectuent avec des températures distantes les unes des autres d'au moins 12K.

**Patentansprüche**

**1.** Verfahren zur Herstellung eines Warmwasserstroms ($M_{ECH}$) mit einer gewünschten Temperatur ($T_{ECH}$) ausgehend von Leitungswasser (10) mittels einer Wärmepumpe (50), die einen Kondensator (4), der geeignet ist, das Leitungswasser durch ein Kältefluid zu erwärmen, das dort kondensiert, und einen Verdampfer (3), in dem Grauwasser zirkuliert, das in der Lage ist, das Kältefluid zu verdampfen, umfasst, wobei das Grauwasser stromaufwärts des Verdampfers (3) in einem Behälter (1) gespeichert ist, der mit verwendetem lauwarmem Wasser versorgt wird, das durch Mischen (110) von Warmwasser und Leitungswasser (10) erhalten wird, wobei das Verfahren einen Schritt des Erhaltens (520; 720) mindestens einer der Temperaturen, Temperatur des Leitungswassers ($T_{EV}$) und Temperatur des verwendeten lauwarmen Wassers ($T_{UTIL}$), umfasst, **dadurch gekennzeichnet, dass** es ferner einen Schritt des Regulierens (540; 730) des Grauwasserstroms ($M_{EG}$), der von dem Behälter (1) kommt und in den Verdampfer (3) eintritt, in Abhängigkeit von der mindestens einen Temperatur ($T_{EV}$, $T_{UTIL}$) umfasst.

**2.** Verfahren zur Herstellung eines Warmwasserstroms ($M_{ECH}$) gemäß Anspruch 1, umfassend einen Schritt des Erhaltens (520) der Temperatur ($T_{EV}$) des Leitungswassers und der Temperatur des verwendeten lauwarmen Wassers ($T_{UTIL}$).

**3.** Verfahren zur Herstellung eines Warmwasserstroms ($M_{ECH}$) gemäß Anspruch 2,

- ferner umfassend einen Schritt des Berechnens (530) eines Verhältnisses der Stromverstärkung ($X_m$), das gleich dem Verhältnis der Differenz der Temperatur von Warmwasser ($T_{ECH}$) und Leitungswasser ($T_{EV}$) zu der Differenz zwischen der Temperatur des verwendeten lauwarmen Wassers ($T_{UTIL}$) und des städtischen Wassers ($T_{EV}$) ist,
- und wobei der Schritt des Regulierens (540) des Grauwasserstroms ($M_{EG}$), der von dem Behälter (1) kommt und in den Verdampfer (3) eintritt, derart erfolgt, dass das Verhältnis zwischen diesem Strom ($M_{EG}$) und dem herzustellenden Warmwasserstrom ($M_{ECH}$) eine Funktion von diesem Verhältnis der Stromverstärkung ($X_m$) darstellt.

**4.** Verfahren zur Herstellung eines Warmwasserstroms ($M_{ECH}$) gemäß Anspruch 3, **dadurch gekennzeichnet, dass** der Schritt des Regulierens (540) des Grauwasserstroms ($M_{EG}$), der von dem Behälter (1) kommt und in den Verdampfer (3) eintritt, derart erfolgt, dass das Verhältnis zwischen diesem Strom ($M_{EG}$) und dem herzustellenden Warmwasserstrom ($M_{ECH}$) gleich diesem Verhältnis der Stromverstärkung ($X_m$) ist.

**5.** Verfahren zur Herstellung eines Warmwasserstroms ($M_{ECH}$) gemäß einem der Ansprüche 1 bis 4, **dadurch gekennzeichnet, dass** es ein vorheriges Bestimmen (510) des herzustellenden Warmwasserstroms ($M_{ECH}$) mit Hilfe eines Lernverfahrens umfasst, zum Beispiel durch einen genetischen Algorithmus unter Verwendung mindestens einer Historie des gemessenen Wasserspiegels (18) in dem Behälter (1), der von dem verwendeten lauwarmen Wasser gespeist wird.

**6.** Verfahren zur Herstellung eines Warmwasserstroms ($M_{ECH}$) gemäß einem der Ansprüche 1 bis 5, **dadurch gekennzeichnet, dass** es einen Schritt des Vorwärmens des Leitungswassers durch das Grauwasser in einem Austauscher (2) umfasst, der stromabwärts des Behälters (1) und stromaufwärts des Kondensators (3) angeordnet ist.

**7.** Verfahren gemäß einem der Ansprüche 1 bis 6, **dadurch gekennzeichnet, dass** der Schritt des Erhaltens der Temperatur des verwendeten lauwarmen Wassers ($T_{UTIL}$) darin besteht, diese Temperatur ($T_{UTIL}$) aus einer mit einem Sensor (20) gemessenen Temperatur des Grauwassers ($T_{EG}$) und einem theoretischen Verlust zu schätzen.

**8.** Verfahren zur Herstellung eines Warmwasserstroms ($M_{ECH}$) gemäß einem der Ansprüche 1 bis 7, **dadurch gekennzeichnet, dass** es einen Schritt umfasst, der darin besteht, zu überprüfen, ob die Temperatur des verwendeten lauwarmen Wassers ($T_{UTIL}$) höher als ein Temperatur-Grenzwert ist, bevor dieses verwendete lauwarme Wasser ($T_{UTIL}$) in dem Behälter (1) gespeichert wird.

**9.** Verfahren zur Herstellung eines Warmwasserstroms ($M_{ECH}$) gemäß einem der Ansprüche 1 bis 8, umfassend einen vorbereitenden Schritt des Füllens des Behälters (1) mit Wasser einer Solltemperatur zwischen plus und minus 8 K um die zu erwartende Temperatur des Grauwassers, die in Abhängigkeit von der Anwendung des Verfahrens bestimmt wird.

**10.** System zur Herstellung eines Warmwasserstroms ($M_{ECH}$) mit einer gewünschten Temperatur ($T_{ECH}$) ausgehend von Leitungswasser (10) mittels einer Wärmepumpe (50), die einen Kondensator (4), der geeignet ist, das Leitungswasser durch ein Kältefluid zu erwärmen, das dort kondensiert, und einen Verdampfer (3), in dem Grauwasser zirkuliert, das in der Lage ist, das Kältefluid zu verdampfen, umfasst, wobei das Grauwasser stromaufwärts des Verdampfers (3) in einem Behälter (1) gespeichert ist, der mit verwendetem lauwarmem Wasser versorgt wird, das durch Mischen (110) von Warmwasser und Leitungswasser (10) erhalten wird, wobei das System Mittel des Erhaltens (17, 19, 20) mindestens einer der Temperaturen, Temperatur des Leitungswassers ($T_{EV}$) und der Temperatur des verwendeten lauwarmen Wassers ($T_{UTIL}$), umfasst, **dadurch gekennzeichnet, dass** es ferner Mittel des Regulierens des Grauwasserstroms ($M_{EG}$), der von dem Behälter (1) kommt und in den Verdampfer (3) eintritt, in Abhängigkeit von der mindestens einen Temperatur ($T_{EV}$, $T_{UTIL}$) umfasst.

**11.** System zur Herstellung eines Warmwasserstroms ($M_{ECH}$) gemäß Anspruch 10, umfassend Mittel des Erhaltens (17, 19, 20) der Temperatur ($T_{EV}$) des Leitungswassers und der Temperatur des verwendeten lauwarmen Wassers ($T_{UTIL}$).

**12.** System zur Herstellung eines Warmwasserstroms ($M_{ECH}$) gemäß Anspruch 11,

- ferner umfassend Mittel des Berechnens (17) eines Verhältnisses der Stromverstärkung ($X_m$), das gleich dem Verhältnis der Differenz der Temperatur von Warmwasser ($T_{ECH}$) und Leitungswasser ($T_{EV}$) zu der Differenz der Temperatur des verwendeten lauwarmen Wassers ($T_{UTIL}$) und des Leitungswassers ($T_{EV}$) ist;
- wobei die Mittel des Regulierens (17) des Grauwasserstroms ($M_{EG}$), der von dem Behälter (1) kommt und in den Verdampfer (3) eintritt, weiterhin geeignet sind festzulegen, dass das Verhältnis zwischen diesem Strom ($M_{EG}$) und dem herzustellenden Warmwasserstrom ($M_{ECH}$) eine Funktion von diesem Verhältnis der Stromverstärkung ($X_m$) darstellt.

**13.** System zur Herstellung eines Warmwasserstroms ($M_{ECH}$) gemäß einem der Ansprüche 10 bis 12, umfassend einen Behälter (8) für das durch das System hergestellte Warmwasser.

**14.** System zur Herstellung eines Warmwasserstroms ($M_{ECH}$) gemäß Anspruch 13, wobei der Behälter für Grauwasser (1) ein Volumen aufweist, das im Wesentlichen gleich dem Volumen des Behälters für das Warmwasser nach Erwärmung (8) dividiert durch das Verhältnis der Stromverstärkung ($X_m$) ist.

**15.** System zur Herstellung eines Warmwasserstroms ($M_{ECH}$) gemäß einem der Ansprüche 10 bis 14, wobei das Kältefluid eine Mischung von Kältefluiden ist, deren Phasenänderungen bei Kondensation mit Temperaturen auftreten, die mindestens 12 K voneinander entfernt sind.

**Claims**

1. Method of production of a flow ($M_{ECH}$) of hot water at a desired temperature ($T_{ECH}$) starting from tap water (10), by a heat pump (50) including a condenser (4) capable of heating tap water using a refrigerant fluid which is condensed there and an evaporator (3) in which grey water circulates capable of condensing said refrigerant fluid, said grey water being stored upstream of said evaporator (3) in a reservoir (1) fed by used warm water obtained by mixing (110) hot water and tap water (10), the method including a step of obtaining (520; 720) at least one temperature among the temperature ($T_{EV}$) of the tap water and the temperature of the used warm water ($T_{UTIL}$), **characterized in that** it also includes a step of adjusting (540; 730) the flow rate of grey water ($M_{EG}$) leaving said reservoir (1) and entering into said evaporator (3) as a function of the at least one temperature ($T_{EV}$, $T_{UTIL}$).

2. The method of production of a flow ($M_{ECH}$) of hot water according to claim 1, including a step of obtaining (520) the temperature ($T_{EV}$) of the tap water and of the temperature of the used warm water ($T_{UTIL}$).

3. The method of production of a flow ($M_{ECH}$) of hot water according to claim 2,

   - also including a step of calculating (530) a flow amplification ratio ($X_m$) equal to the ratio of the temperature gap of the hot water ($T_{ECH}$) and the tap water ($T_{EV}$) to the gap between the temperatures of the used warm water ($T_{UTIL}$) and the tap water ($T_{EV}$),
   - during which said step (540) of adjusting the flow of grey water ($M_{EG}$) leaving said reservoir (1) and entering into said evaporator (3) is such that the ratio between this flow rate ($M_{EG}$) and said flow rate of hot water to be produced ($M_{ECH}$) is a function of said flow amplification ratio ($X_m$).

4. The method of production of a flow ($M_{ECH}$) of hot water according to claim 3, **characterized in that** said step (540) of adjusting the flow rate of grey water ($M_{EG}$) leaving said reservoir (1) and entering said evaporator (3) is such that the ratio between this flow rate ($M_{EG}$) and said flow of hot water to be produced ($M_{ECH}$) is equal to said flow amplification ratio ($X_m$) .

5. The method of production of a flow ($M_{ECH}$) of hot water according to one of claims 1 to 4, **characterized in that** it comprises a prior determination (510) of the flow rate ($M_{ECH}$) of hot water to be produced using a learning method, for example by genetic algorithm, using at least one time history of the measured water level (18) in said reservoir (1) fed by the used warm water.

6. The method of production of a flow ($M_{ECH}$) of hot water according to one of claims 1 to 5, **characterized in that** it includes a step of pre-heating tap water using said grey water in an exchanger (2) situated downstream of said reservoir (1) and upstream of said condenser (3).

7. The method according to any one of claims 1 to 6, **characterized in that** said step of obtaining the temperature of the used warm water ($T_{UTIL}$) consists of estimating this temperature ($T_{UTIL}$) based on a temperature of the grey water ($T_{EG}$) measured by a sensor (20) and a theoretical heat loss.

8. The method of production of a flow ($M_{ECH}$) of hot water according to one of claims 1 to 7, **characterized in that** it includes a step consisting of verifying that the temperature of the used warm water ($T_{UTIL}$) is greater than a threshold temperature before storing this used warm water ($T_{UTIL}$) in said reservoir (1).

9. The method of production of a flow ($M_{ECH}$) of hot water according to any one of claims 1 to 8, including a preliminary step of filling said reservoir (1) with water at a target temperature comprised between plus and minus 8K around the expected temperature for grey water, determined depending on a use of said method.

10. A system of production of a flow ($M_{ECH}$) of hot water at a desired temperature ($T_{ECH}$) starting from tap water (10), by a heat pump (50) including a condenser (4) capable of heating tap water using a refrigerant fluid which condenses there and an evaporator (3) in which grey water circulates capable of evaporating said refrigerant fluid, said grey water being stored upstream of said evaporator (3) in a reservoir (1) fed by used warm water obtained by mixing (110) hot water and tap water (10), the system comprising means of obtaining (17, 19, 20) at least one temperature among the temperature ($T_{EV}$) of the tap water and the temperature of the used hot water ($T_{UTIL}$) and being **characterized in that** it also includes means of adjusting the flow rate of grey water ($M_{EG}$) leaving said reservoir (1) and entering into said evaporator (3) as a function of the at least one temperature ($T_{EV}$, $T_{UTTL}$).

**11.** The system of production of a flow ($M_{ECH}$) of hot water according to claim 10 including means of obtaining (17, 19, 20) the temperature ($T_{EV}$) of the tap water and the temperature of the used warm water ($T_{UTIL}$).

**12.** The system of production of a flow ($M_{ECH}$) of hot water according to claim 11,

- also including means of calculating (17) a flow amplification ratio ($X_m$) equal to the ration of the temperature gap of the hot water ($T_{ECH}$) and the tap water ($T_{EV}$) and the temperature gap of the used warm water ($T_{UTIL}$) and the tap water ($T_{EV}$) ;
- the means (17) of adjusting the flow rate of grey water ($M_{EG}$) leaving said reservoir (1) and entering into said evaporator (3) also being able to establish that the ratio between this flow rate ($M_{EG}$) and said flow rate of hot water to be produced ($M_{ECH}$) is a function of said flow amplification ratio ($X_m$) .

**13.** The system of production of a flow ($M_{ECH}$) of hot water according to one of claims 10 to 12, comprising a reservoir (8) for said hot water produced by said system.

**14.** The system of production of a flow ($M_{ECH}$) of hot water according to claim 13, wherein the grey water reservoir (1) has a volume substantially equal to the volume of the reservoir of hot water after heating (8) divided by the flow amplification ratio ($X_m$).

**15.** The system of production of a flow ($M_{ECH}$) of hot water according to any one of claims 10 to 14, wherein said refrigerant fluid is a mixture of refrigerant fluids in which the phase changes during condensation occur at temperatures separated from one another by at least 12K.

FIG.1

FIG.2

FIG.3

FIG.4

Détermination d'un débit moyen d'eau chaude à produire $M_{ECH}$ — 510

Mesure de la température d'eau de ville distribuée $T_{EV}$ **et** mesure de la température des eaux grises $T_{EG}$ — 520

(a)

Détermination du rapport d'amplification de débit $X_M$

530 (a) (b)

Réglage du débit d'eau grise $M_{EG}$ injecté dans la pompe à chaleur — 540

**Fig. 5**

Transfert de chaleur par la pompe à chaleur 50 — 550

Stockage de l'eau chaude — 560

Détermination d'un débit
instantané d'eau chaude à
produire $M_{ECH}$ — 610

Mesure de la température
d'eau de ville distribuée $T_{EV}$ **et**
mesure de la température des
eaux grises $T_{EG}$

520

(a)

Détermination du rapport
d'amplification de débit $X_M$

530

(b)

(a)

Réglage du débit d'eau
grise injecté $M_{EG}$ dans la
pompe à chaleur

540

**Fig. 6**

Transfert de chaleur par
la pompe à chaleur 50 — 550

Utilisation instantanée de
l'eau chaude produite — 660

Détermination du débit d'eau chaude à produire $M_{ECH}$ ~710

Mesure de la température d'eau de ville distribuée $T_{EV}$ **ou** mesure de la température des eaux grises $T_{EG}$ ~720

**Fig. 7**

Réglage du débit d'eau grise $M_{EG}$ injecté dans la pompe à chaleur ~730

Transfert de chaleur par la pompe à chaleur 50 ~740

Stockage de l'eau chaude ou utilisation instantanée de l'eau chaude ~750

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2885406
- WO 0504597 A
- EP 1724531 A
- CN 2779309
- CN 101504190
- FR 2942299